**Europäisches Patentamt**

**European Patent Office**

**Office européen des brevets**

(19)

(11) Numéro de publication : **0 221 982**
**B1**

(12) ## FASCICULE DE BREVET EUROPÉEN

(45) Date de publication du fascicule du brevet :
03.01.90

(21) Numéro de dépôt : 86903402.5

(22) Date de dépôt : 20.05.86

(86) Numéro de dépôt international :
PCT/FR 86/00171

(87) Numéro de publication internationale :
WO/8607103 (04.12.86 Gazette 86/26)

(51) Int. Cl.⁵ : **D 04 H 1/54, B 29 C 43/00,
B 29 C 67/14, B 29 C 67/22//
B29K105/04, B29K105/08**

(54) **MATERIAU STRATIFIE A BASE DE RESINE THERMOPLASTIQUE ET PROCEDE POUR SA FABRICATION.**

(30) Priorité : 23.05.85 FR 8507997
21.08.85 FR 8512694
21.01.86 FR 8600905
21.01.86 FR 8600906

(43) Date de publication de la demande :
20.05.87 Bulletin 87/21

(45) Mention de la délivrance du brevet :
03.01.90 Bulletin 90/01

(84) Etats contractants désignés :
AT BE CH DE FR GB IT LI LU NL SE

(56) Documents cités :
EP—A— 0 091 974
EP—A— 0 116 845
DE—A— 1 953 037
DE—A— 2 249 138
FR—A— 2 132 377
FR—A— 2 246 685
FR—A— 2 339 488
LU—A—     57 393
US—A— 3 660 555

(73) Titulaire : **ARNAUD, Guy
Magnieu
F-01300 Belley (FR)**

(72) Inventeur : **ARNAUD, Guy
Magnieu
F-01300 Belley (FR)**

(74) Mandataire : **Ropital-Bonvarlet, Claude
Cabinet BEAU DE LOMENIE 99, Grande rue de la
Guillotière
F-69007 Lyon (FR)**

Jouve, 18, rue St-Denis, 75001 Paris, France

## Description

### Domaine technique

La présente invention a pour objet le domaine technique des matériaux à base de résines thermoplastiques et elle concerne, plus spécialement, les matériaux du type pouvant être généralement qualifiés de stratifiés, utilisables directement comme tels ou entrant dans la fabrication d'articles stratifiés.

### Technique antérieure

Les résines thermoplastiques sont connues pour ne pas permettre, généralement, la réalisation de matériaux stratifiés comportant des éléments fibreux de renforcement de grande longueur, comme dans le cas de résines thermodurcissables.

Une méthode de renforcement des résines thermoplastiques, généralement moulées sous pression élevée comprise entre 100 et 600 bar, consiste à incorporer des fibres courtes en verre, par exemple. Cette incorporation des fibres à la résine est réalisée préalablement au moulage en incorporant des fibres dont la longueur varie entre cinq et dix millimètres et en conditionnant le mélange ainsi réalisé sous forme de granulés. Le moulage est réalisé à partir de ces granulés par injection à haute pression. Au cours des différentes phases de fabrication, la longueur moyenne des fibres diminue considérablement. Par ailleurs, il a été constaté qu'à l'intérieur même de l'objet moulé, les fibres les plus longues étaient toutes orientées dans le sens d'écoulement de la matière, ce qui présente des inconvénients.

En outre, l'outillage nécessaire pour la réalisation de tels stratifiés à base de résines thermoplastiques (presse à injecter et moule) est très coûteux et, de plus, cet outillage est souvent détérioré rapidement, du fait du caractère très abrasif de certaines fibres. Par ailleurs, dans toutes ces techniques, se pose le problème de l'évacuation de l'air lorsque l'on réalise une structure stratifiée armée de fibres de renforcement, ce qui peut entraîner des défauts dans la pièce terminée si cette évacuation n'est pas totale.

Enfin, lorsque l'on réalise une pièce moulée à partir de résines thermoplastiques chargées de fibres (verre par exemple), la viscosité de la résine est augmentée et ne permet donc d'obtenir que des articles de surfaces limitées et d'épaisseur relativement importante. De tels articles, s'ils réagissent mieux aux contraintes mécaniques qu'une pièce réalisée en résine pure, ont cependant une résistance aux contraintes répétées de flexion limitée par le fait qu'il se produit un échauffement entre les fibres et la résine ou entre les fibres elles-mêmes.

Par suite, malgré tous les avantages que présentent les résines thermoplastiques à ce jour, leur utilisation dans le domaine des articles stratifiés est minime par rapport aux résines thermodurcissables.

De telles matières premières et une telle méthode de fabrication ne permettent donc pas d'obtenir favorablement, soit un matériau de base, soit un article stratifié présentant, par sa structure, une forte cohésion lui conférant des caractéristiques mécaniques convenables et des propriétés d'association en strates avec d'autres matériaux pour l'obtention d'articles stratifiés exempts de risque de délaminage.

Or, il existe un besoin latent d'un tel matériau utilisable en tant que tel ou en tant que matériau de base, pour la réalisation de complexes stratifiés cohérents, notamment pour ce qui concerne les parois, cloisons ou articles devant présenter un bon coefficient d'isolation phonique et thermique et aussi une grande possibilité d'association à d'autres matériaux.

On aurait pu penser qu'une solution à ce problème général était fournie par l'enseignement divulgué par le brevet français 2 061 313. En effet, dans ce brevet, il est préconisé une méthode pour la fabrication d'un matériau et/ou d'un article stratifié à base de résines thermoplastiques. Selon ce brevet, il est prévu de réaliser un matériau en plaçant dans un moule une nappe de fibres thermoplastiques pressées et chauffées jusqu'à la température de fusion. Le moule peut être chauffé, simultanément, sur les deux faces, pour l'obtention d'une plaque ou analogue, à deux surfaces lisses, ou sur une face seulement, pour l'obtention d'une plaque présentant une surface lisse et une surface fibreuse.

Un tel nouveau matériau est obtenu à partir d'un moule fermé, chauffé à la température de fusion de la matière et par lequel on soumet la matière thermoplastique à une pression.

Cette méthode de fabrication n'est pas satisfaisante pour les raisons ci-dessous.

La mise en œuvre d'un moule fermé a pour inconvénient majeur de laisser subsister dans le matériau des inclusions d'air ou autre phase gazeuse qui possèdent les inconvénients bien connus suivants.

Tout d'abord, ces inclusions confèrent au matériau un caractère hétérogène et des caractéristiques de résistance mécanique aléatoires. En outre, si un tel matériau est soumis ultérieurement à un chauffage pour une phase de thermoformage, les inclusions gazeuses montent en pression et se développent au sein de la masse du matériau en augmentant encore le caractère hétérogène et les mauvaises caractéristiques mécaniques.

Si un moulage du matériau est réalisé, il est à craindre que ne se développent des poches internes formées par la concentration des inclusions se regroupant par migration dans des zones préférentielles du moule. La pièce obtenue présente alors un affaiblissement localisé difficilement discernable.

L'existence d'inclusions gazeuses favorise la reprise d'humidité nuisant à la qualité du matériau.

La présence de poches ou inclusions confère des mauvaises caractéristiques de résistance à la flexion alternée et font naître un risque de délaminage d'une ou plusieurs strates du matériau obtenu.

Pour tenter de remédier à ces inconvénients, on a proposé de soumettre la matière dans le moule à une pression élevée, en vue, non pas d'éliminer les inclusions, mais de réduire leur volume. C'est dans cet esprit, bien que cela ne soit pas indiqué, que le brevet français rappelé ci-avant préconise de soumettre la matière à une pression de l'ordre de 150 kp/cm$^2$.

En réalité, un tel procédé possède un grand nombre d'inconvénients.

En premier lieu, si le volume des inclusions gazeuses a tendance à diminuer, en revanche, leur pression interne tend à croître notablement. Il existe ainsi, au sein du matériau, des zones ponctuelles à pression élevée augmentant encore le caractère hétérogène du matériau qui se prête plus mal encore à un thermoformage ultérieur.

En second lieu, on comprend que le chauffage de la matière fibreuse se développe tout d'abord au contact de la ou des parois du moule. Il en résulte la naissance d'une masse, d'abord pâteuse, puis fluide, localisée qui est fortement sensible à la pression appliquée. Les expérimentations ont, d'ailleurs, permis de constater que, dans un tel cas, il existait une sortie de phase fluide séparée se déplaçant relativement sous la forme d'un front. Dans le cas de réalisation d'un matériau incluant une nappe ou un réseau de fibres de renforcement, un tel front désorganise les fibres qui sont, en partie au moins, localement refoulées par l'avance du front fluide. Ces fibres sont localement compactées, peu ou pas enrobées par la matière fluide et, pour certaines au moins, bloquées lors du refroidissement dans un état de contrainte.

Toutes ces conséquences ont pour résultat l'obtention d'un matériau hétérogène possédant des caractéristiques mécaniques incertaines.

On connaît, également, d'après la demande DE-A-2 249 138 de nouveaux matériaux de renfort en matières synthétiques thermoplastiques obtenus par le passage sous pression et en continu d'un voile de carde entre une paire de rouleaux dont l'un au moins est chauffant. Le procédé mis en œuvre permet de fabriquer un matériau stratifié comprenant une couche de résine thermoplastique compacte, résultant de la fusion des fibres, ainsi qu'une couche fibreuse. Le procédé ne permet, cependant, pas d'obtenir un matériau exempt d'inclusion gazeuse, ni de conserver, intégralement, les caractéristiques physiques originelles des fibres, en raison, notamment, des conditions de pressions, de montée en température, de l'effet de défilement et de l'évolution du front fluide.

On connaît, aussi, d'après la demande de brevet EP-A-0 091 974, un matériau non tissé provenant de la fusion de fibres thermoplastiques. Le procédé d'obtention utilise, pour la fusion, à la fois le principe classique du passage en continu du produit entre les rouleaux chauffants et le principe du rayonnement infra-rouge. Le matériau présente une couche compacte de fibres fondues et une couche fibreuse. Le procédé souffre, cependant, des mêmes inconvénients que le procédé précédemment décrit, même si l'emploi simultané ou non de rouleaux chauffants et du rayonnement infra-rouge modifie, sensiblement, l'évolution du front liquide lors de la fusion. En conséquence, le produit obtenu contient des inclusions gazeuses et la couche fibreuse finale est donc au moins mécaniquement déformée.

Enfin, on connaît, par la demande LU-A-57 393, une étoffe piquée à l'aiguille et non tissée, ainsi que son procédé de fabrication utilisant, également, le principe classique de la fusion en continu de l'étoffe défilant entre deux rouleaux chauffants. Pour les mêmes raisons évoquées ci-dessus, on ne peut obtenir un matériau exempt d'inclusions gazeuses, ni une couche fibreuse n'ayant pas subi de déformations au moins mécaniques.

La présente invention vise à résoudre les problèmes ci-dessus, en proposant un nouveau matériau à base de résines thermoplastiques et un nouveau procédé d'obtention d'un tel matériau. L'invention vise aussi les articles obtenus à partir d'un tel nouveau matériau.

L'objet de l'invention est de proposer un nouveau matériau qui puisse être utilisé tel quel ou pour la constitution de matériaux complexes stratifiés.

Un objet de l'invention est de fournir un nouveau matériau exempt d'inclusions gazeuses et comportant une structure à base d'au moins une couche ou croûte de matière dense et compacte comportant, sur une face et intimement lié à elle, un réseau fibreux à base 'de fibres de même nature.

Un autre objet de l'invention est de rendre possible la fabrication d'un nouveau matériau stratifié comprenant deux couches ou croûtes denses et compactes reliées entre elles par une nappe fibreuse constituant un matelas d'isolation à caractère pseudo-élastique.

Un autre objet de l'invention est de rendre possible la fabrication d'un matériau stratifié incluant une ou plusieurs strates de fibres de renforcement.

Exposé de l'invention

Selon l'invention, le procédé de fabrication d'un nouveau matériau à base de résine thermoplastique, dans lequel on :

— prépare un feutre à base de fibres en résine thermoplastique,
— couche au moins un feutre dans un moule,
— chauffe l'une des faces du moule au moins en exerçant une pression sur le feutre,

— monte et régule la température de la face chauffante du moule jusqu'à la température de fusion des fibres en résine thermoplastique,

— maintient cette température pour provoquer la fusion des fibres du feutre sur une partie de l'épaisseur de ce dernier,

— ouvre le moule pour dégager le nouveau matériau,

est caractérisé en ce qu'il consiste à :

— coucher le feutre dans un moule ouvert à sa périphérie,

— chauffer l'une des faces du moule en exerçant une pression sur le feutre comprise entre 490 et 2 943 Pa (50 etg 300 kgp/m²),

— refroidir le moule avant son ouverture et après la fusion des fibres, tout en maintenant ladite pression.

L'invention vise, également, un nouveau matériau stratifié, à base d'un feutre d'une résine thermoplastique, se présentant sous la forme d'une croûte ayant au moins une face lisse et possédant au moins une couche de résine thermoplastique dense et compacte et une couche fibreuse formée de fibres en résine thermoplastique faisant partie intégrante de la couche compacte, caractérisé en ce que la couche de résine thermoplastique dense et compacte est exempte d'inclusion gazeuse et les fibres de la couche fibreuse ont l'aspect foisonnant des fibres du feutre initial, notamment au niveau de leur pied de liaison avec la croûte.

L'invention a encore pour objet tous matériaux complexes stratifiés nouveaux obtenus à partir du matériau nouveau objet de la présente invention.

Diverses autres caractéristiques ressortent de la description faite ci-dessous en référence aux dessins annexés qui montrent, à titre d'exemples non limitatifs, des formes de réalisation de l'objet de l'invention.

Brève description des dessins

La fig. 1 est une coupe-élévation schématique du nouveau matériau selon l'invention.

La fig. 2 est une coupe-élévation montrant une phase de fabrication.

Les fig. 3 et 4 sont des coupes-élévations illustrant deux variantes de réalisation du matériau.

La fig. 5 est une coupe-élévation représentant un développement de réalisation selon la fig. 4.

La fig. 6 est une vue en plan montrant, à plus grande échelle, un élément entrant dans la constitution du matériau selon la fig. 5.

La fig. 7 est une vue en plan mettant en évidence, à plus grande échelle, un détail structurel du matériau selon la fig. 5.

Les fig. 8 et 9 sont des coupes-élévations illustrant deux autres variantes de réalisation du matériau.

Meilleure manière de réaliser l'invention

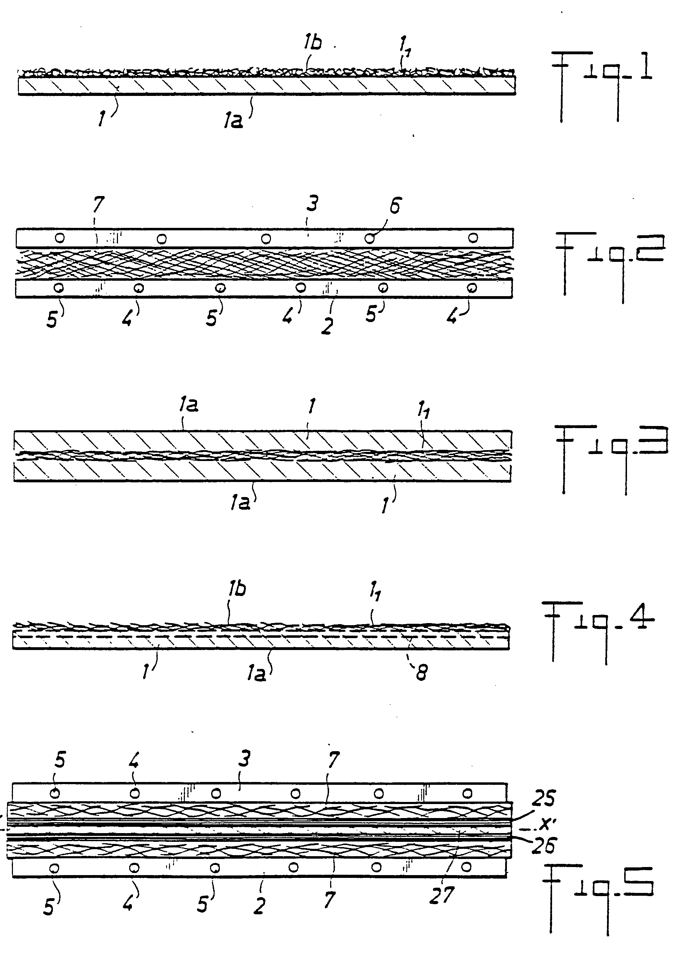

La fig. 1 illustre le nouveau matériau selon l'invention qui est caractérisé en ce que, réalisé entièrement à base de résine thermoplastique, il comprend une croûte de résine 1 compacte, exempte d'inclusion gazeuse, d'épaisseur constante ou non, de forme plane ou complexe. Cette croûte 1 présente une face lisse 1a et une face 1b à caractère fibreux, duveteux, formée par une multitude de fibres en résines thermoplastiques entrelacées ou non, faisant corps avec la matière de la croûte à partir de laquelle elles s'élèvent pour former une couche souple $1_1$ dont l'épaisseur peut être quelconque par rapport à celle de la croûte 1.

Selon la matière première utilisée, la croûte 1 présente un caractère rigide ou relativement déformable élastiquement, possédant les caractéristiques physiques de la matière première.

Pour obtenir un tel nouveau matériau, on procède de la façon suivante.

Préalablement à la mise en œuvre du procédé selon l'invention, on réalise, de manière connue, des feutres à base d'une résine thermoplastique, telle que, par exemple, polyamides, polypropylène, polytéréphtalate d'éthylène, etc... Ces feutres peuvent être constitués, soit de fibres discontinues, soit de filaments continus et être réalisés, dans ce cas, selon la technique connue sous l'expression « spun bonded ».

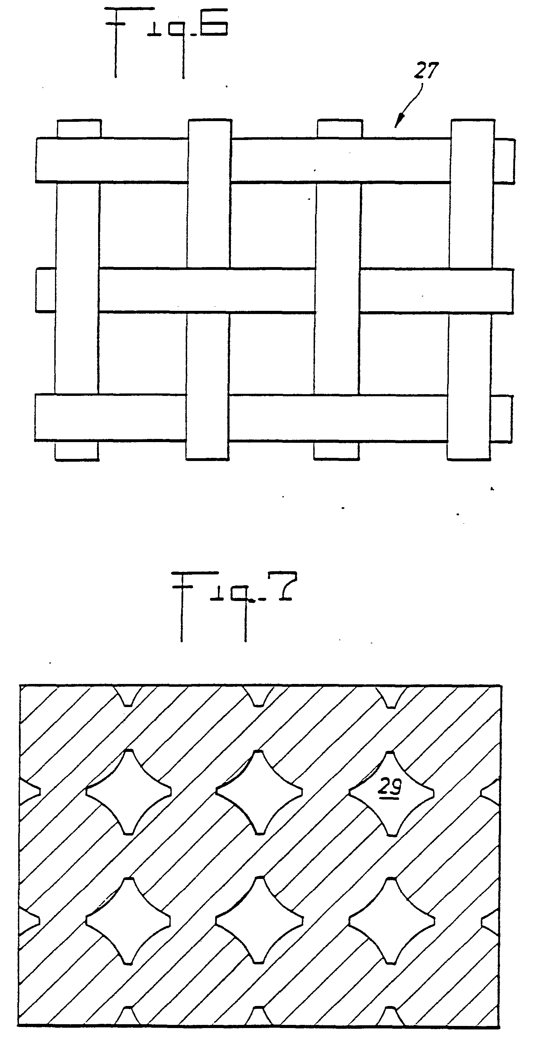

Si l'on se reporte à la fig. 2, pour la mise en œuvre du procédé selon l'invention, on utilise un appareillage comportant, essentiellement, deux plateaux 2, 3 superposables. Le plateau inférieur 2 peut être, alternativement chauffé et refroidi, alors que le plateau supérieur 3 n'est que refroidi. La mise en température des plateaux 2, 3 est obtenue par tout moyen approprié, par exemple au moyen de conduits 4, 5, 6 véhiculant des fluides caloporteurs. Par exemple, le plateau inférieur 2 comporte une alternance de conduits 4, 5 mis en œuvre successivement, les uns 4 permettant la montée en température dudit plateau, les autres 5 permettant son refroidissement. Les conduits 6 du plateau supérieur 3 sont, quant à eux, uniquement destinés à véhiculer les fluides refroidissants. Les deux plateaux 2, 3 seront, par ailleurs, associés à des moyens permettant de les éloigner et de les rapprocher l'un de l'autre, de manière à exercer une pression sur la matière emprisonnée entre eux.

Conformément à l'invention, on dépose sur le plateau 2 un feutre 7 de résine thermoplastique thermofusible que l'on recouvre par le plateau 3 amené à exercer sur le feutre une faible pression à l'unité de surface, par exemple comprise entre 490 et 2 943 Pa (50 et 300 kgp/m²). Selon la construction du plateau 3, cette pression peut résulter simplement du poids du plateau ou être entretenue par un mécanisme approprié ne faisant pas partie de l'invention.

La faible pression exercée ne nécessite donc pas que le plateau 3 soit lourd. Ce plateau pourra donc être lesté ou manœuvré par un dispositif

permettant de contrôler la pression exercée. Dans le sens de la pression contrôlée, la course du plateau devra être limitée par des butées réglables. Dans certains cas, lorsque sa surface de contact n'est pas trop tourmentée, le plateau froid 3 peut être remplacé par un diaphragme souple. Son refroidissement sera alors assuré par le fluide qui le manœuvre ou par une ventilation lorsque l'outillage est au repos entre deux cycles de fabrication.

Le plateau inférieur 2 supporte une charge relativement faible. De ce fait, sa construction peut être allégée, ce qui est intéressant d'un point de vue économique. Une solution économique, tant d'un point de vue construction que d'un point de vue consommation d'énergie, consiste à disposer un isolant entre la surface thermiquement active du plateau 2 et la structure qui assure la rigidité. Cet ensemble peut être équipé, localement, de serre-flancs réglables, occupant seulement une partie des bords des plateaux pour maintenir en position le feutre.

Les plateaux 2 et 3 forment ainsi un moule présentant la caractéristique de comporter une périphérie ouverte, dont la fonction primordiale ressortira de ce qui suit.

Selon le procédé de l'invention, après avoir chargé le moule avec un feutre 7, on réalise la montée en température du plateau 2 jusqu'à atteindre la température de fusion de la matière thermoplastique et, simultanément, on assure le refroidissement du plateau 3. Les fibres en contact avec le plateau 2 sont, progressivement, fondues et forment une couche de matière pâteuse tout d'abord, puis relativement fluide qui progresse sous la forme d'un front s'élevant verticalement, au fur et à mesure que le niveau de la température de fusion monte. Un tel niveau atteint un plancher de stabilisation ou d'équilibre dépendant de la relation entre les calories apportées au plateau 2 et celles prélevées du plateau 3.

Ainsi, il se forme une couche fondue associée par la matière même à une couche de fibres non fondues superposées, la relation d'épaisseurs des couches dépendant de la relation thermique entre les plateaux.

Le procédé de l'invention a ceci de remarquable que la fusion progressive des fibres du feutre 7 se développe selon un front croissant verticalement par rapport à une couche fibreuse superposée toujours présente. Il en résulte que tout dégagement gazeux peut suivre la structure aérée de cette couche qui permet, par l'ouverture périphérique du moule, d'assurer un dégazage permanent efficace. Ceci permet d'obtenir une couche fondue totalement exempte d'inclusion gazeuse et possédant, par conséquent, des caractéristiques physiques et mécaniques encore jamais obtenues.

Le procédé peut se dérouler sans contrainte ni risque de fuite ou étalement de la couche fondue hors du moule ouvert, car la très faible pression exercée par le plateau 3 est choisie pour éviter le fluage de la matière dès sa fusion. Pour contribuer à l'obtention d'un tel résultat, il peut aussi être envisagé de placer dans le moule un matelas fibreux ou feutre 7 débordant les bords périphériques des plateaux 2 et 3.

Après fusion de la matière fibreuse sur l'épaisseur désirée, le plateau 2 est refroidi pour gélifier et durcir la couche fondue et obtenir une croûte 1 compacte présentant, sur son côté en contact avec le plateau 2, une face lisse 1a. Le refroidissement s'effectue en maintenant la pression exercée par le plateau 3.

Le moule peut alors être ouvert pour dégager le matériau obtenu.

En raison de la faible pression exercée par le plateau 3, la couche duveteuse 1b est réellement constituée par les fibres du feutre, lesquelles se présentent sous l'aspect initial, étant donné qu'elles n'ont subi aucune contrainte de déformation permanente, notamment, au niveau de leur pied de liaison avec la croûte 1. Ces fibres non fondues, mais néanmoins parties intégrantes de la croûte, conservent ainsi l'aspect foisonnant qu'elles conféraient au feutre, caractéristique physique encore jamais obtenue.

Le produit nouveau obtenu est ainsi un matériau nouveau pouvant être qualifié de stratifié, si l'on qualifie la croûte 1 et la couche $1_1$ de strates.

Ce produit nouveau peut être utilisé à des fins diverses en tant que tel, pour former des placages, revêtements ou autres parements à caractère esthétique, protecteur, confortable, selon que la face accessible est la face lisse 1a ou la face duveteuse 1b. Un tel matériau peut être utilisé en décoration, en emballage ou en produit industriel simple ou complexe.

Un tel matériau peut aussi être transformé par thermoformage, puisqu'il suffit de chauffer la croûte pour la ramollir et lui conférer la forme désirée.

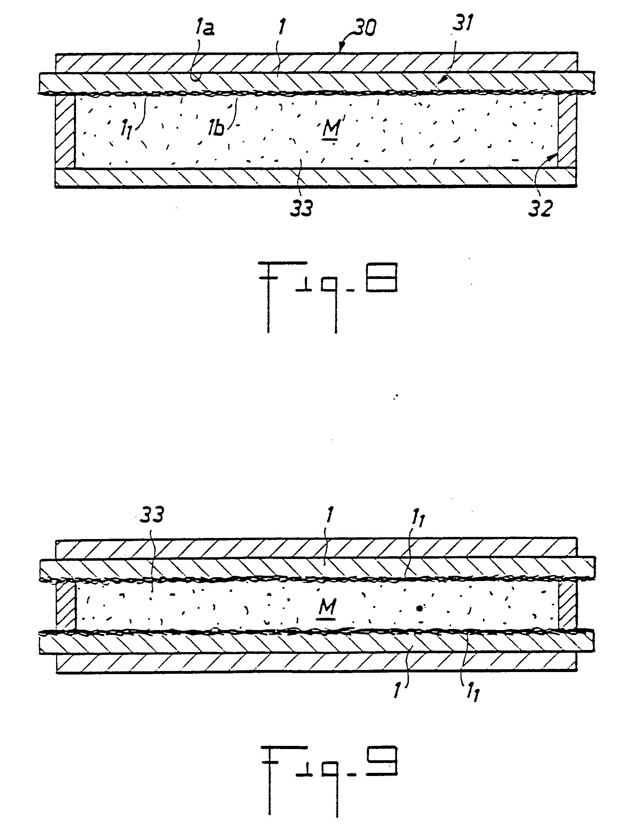

Un développement de l'invention est illustré par la fig. 3, selon laquelle les plateaux 2 et 3 sont chauffés alternativement ou simultanément pour produire un matériau comprenant deux croûtes 1 à faces lisses opposées qui sont intimement reliées entre elles par une couche $1_1$ duveteuse correspondant à une épaisseur de fibres du feutre non fondues. Bien entendu, en faisant varier les lois d'apport et de prélèvement de calories à partir des plateaux 2 et 3, il est possible d'obtenir des épaisseurs de croûtes 1 et de couche $1_1$ identiques ou variables selon l'application future du matériau.

La fig. 4 illustre un autre développement consistant à produire un matériau incluant une structure de renforcement interne 8 de fibres non thermofusibles. Dans un tel cas, on procède de la façon suivante.

On réalise, par ailleurs, une structure textile de renforcement, en verre, carbone, polyamide aromatique..., se présentant sous toute forme appropriée, telle que tissus, nappes unidirectionnelles, nappes bi ou tridirectionnelles, dont les fils ou fibres sont enrobés d'une matière fusible s'ils ne sont pas eux-mêmes en une telle matière par ailleurs compatible avec celle des feutres 7. Dans la mise en œuvre du procédé conforme à l'invention, cet élément de renfort textile est pris en sandwich entre deux feutres 7 à base de filaments ou fibres thermoplastiques.

On charge, ensuite, le plateau 2 d'un premier feutre 7 que l'on recouvre d'une structure de renforcement 8 sur laquelle on dépose un second feutre 7, en général en matière identique au premier. Il s'agit là de la forme la plus simple de mise en œuvre du procédé selon l'invention, étant entendu que d'autres combinaisons de feutres et de structures textiles de renforcement pourraient être envisagées, l'important étant que les deux nappes extérieures de l'empilement en contact avec les plateaux soient constituées de feutres à base de fibres thermofusibles.

Le feutre 7, en contact avec le plateau chauffant 2, est entièrement fondu par le traitement thermique. Par ailleurs, il en est de même pour la matière fusible associée à la structure textile de renforcement 8 ainsi que pour une partie de l'épaisseur du second feutre au voisinage de sa zone de contact avec la nappe 8. Après refroidissement du plateau 2 et relevage du plateau supérieur 3, le produit fini peut être retiré. Il se présente sous la forme d'une feuille de résine lisse d'un côté et d'aspect feutré de l'autre, la structure de renforcement 8 étant incluse. En d'autres termes, le produit obtenu se présente sous la forme de strates, fermement liées entre elles par la fusion de la résine thermoplastique du feutre 7, de la structure de renforcement 8 et d'une partie du second feutre 7, sans, cependant, qu'il y ait une interpénétration entre lesdites strates, cela étant obtenu par le fait que, conformément au procédé selon l'invention, une très faible pression est exercée pendant le traitement et que, par ailleurs, la périphérie de l'empilement est libre, favorisant ainsi un dégazage des structures fibreuses.

Par rapport aux procédés antérieurs permettant de réaliser des structures stratifiées, le procédé selon l'invention présente de nombreux avantages qui peuvent s'expliquer par le fait que, conformément à l'invention, la résine est préalablement conditionnée sous forme de feutre et qu'il est ainsi possible d'obtenir une répartition de la matière dans le moule au moins aussi uniforme qu'avec les techniques antérieures. De plus, l'obtention d'une structure de forme non développable s'en trouve facilitée, étant donné qu'un feutre épouse très facilement une telle forme alors qu'un film doit être préalablement mis en forme.

Par ailleurs, le procédé selon l'invention permet d'éliminer avec certitude l'air emprisonné entre les matériaux et le moule. De plus, grâce au choix d'une résine sous forme de feutre, dans de telles conditions de fusion, le feutre faiblement comprimé reste assez élastique pour que les fibres non fondues se maintiennent au contact du moule, alors que la résine fluide qui pénètre entre les fibres non fondues du feutre, véhicule l'énergie qu'elle a acquise. En conséquence, la résine déjà fluide est retenue en déplacement latéral par des fibres non fondues. La progression thermique est beaucoup plus rapide que dans une résine statique.

Enfin, lorsque l'on souhaite réaliser un stratifié comportant plusieurs nappes de fibres de renforcement, il suffit d'intercaler, conformément à l'invention, entre chacune des nappes, un feutre léger ayant la même nature que les feutres externes, ce qui facilite le pontage entre ces différentes nappes et ce, sans interpénétration de la résine entre les différentes strates. La présence de tels feutres permet, en outre, d'évacuer de manière totale l'air emprisonné dans les nappes.

Il est, bien entendu, possible de mettre en œuvre le développement selon la fig. 4, en association avec l'obtention d'un matériau selon la fig. 3.

La fig. 5 illustre un autre développement de l'invention selon lequel on réalise un matériau stratifié renforcé, du type de celui de la fig. 3, mais qui possède une résistance ou des caractéristiques mécaniques encore améliorées. Comme précédemment, on interpose entre les plateaux 2 et 3 deux feutres 7 entre lesquels sont disposées trois couches de structures fibreuses de renforcement 25, 26 et 27 superposées.

Dans ce mode de réalisation, la couche 27, disposée dans le plan de symétrie, est constituée d'un tissu composé de fils monobrin fusibles, tels que représentés à la fig. 6. Ledit tissu est constitué de fils de chaîne et de trame espacés et permet, après traitement conformément à l'invention, d'assurer le pontage entre les renforts 25, 26 proprement dits.

Dans cette forme de mise en œuvre, pendant toute la durée de la fusion des feutres 7, le tissu de pontage 27 facilite le dégazage par sa tranche. La fig. 7 est une vue en coupe, suivant un plan de symétrie, tel que x — x' de la fig. 5, d'une structure stratifiée réalisée grâce à ce procédé. Ainsi que cela ressort de cette fig. 7, au cours de la fusion, l'épaisseur du tissu a été ramenée à une épaisseur légèrement inférieure à celle du fil qui le constituait. En raison de la surépaisseur due à l'entretoisement, on comprend qu'il en résulte une fusion et un étalement non uniformes de la matière des fils laissant subsister des chambres occluses 29 formant une sorte de réseau maillé entre les deux strates opposées constituées par les croûtes 1, voire les couches $1_1$ et les structures de renforcement 8.

La présence d'un tel réseau intermédiaire, placé dans la zone neutre, permet de conférer au complexe stratifié des caractéristiques encore jamais obtenues. En effet, la surépaisseur ainsi créée permet de comparer cette structure à celle réalisée avec nids d'abeille. L'épaisseur est moins importante mais la liaison est améliorée.

La fig. 8 montre un autre développement de l'invention selon lequel on réalise un complexe stratifié en disposant, dans un moule 30, une plaque 31 de nouveau matériau, par exemple du type selon la fig. 1. La plaque 31 est disposée pour être appliquée sur le fond du moule 30 par la face lisse 1a de la croûte 1. La face duveteuse 1b est ainsi orientée vers le volume libre 32 du moule qui, bien entendu, n'est représenté que de façon schématique pour illustrer un volume de confinement. Dans le moule 30, on développe ensuite une mousse M destinée à occuper le volume libre 32 selon un procédé connu, spécifique de la matière première choisie et à la portée de l'homme de l'art. La mousse M, par exemple de polyuréthanne, forme ainsi une couche 33 occupant tout le volume 32 qui en assure le confinement ainsi que la conformation, et dont la densité est choisie en fonction de la destination du matériau complexe stratifié. La couche 33 de mousse M est intimement liée à la plaque 31 par la couche duveteuse $1_1$ qui forme une strate de liaison intime et de transition progressive s'opposant à tout risque de délaminage ultérieur. Dans la phase de développement en mousse, le moule est orienté pour que la croûte 1 soit en position haute pour favoriser le dégazage par la couche duveteuse $1_1$. A cet effet, il est prévu d'utiliser un moule possédant un entourage ou cadre 34 amovible pour permettre la mise en place d'une plaque 31 débordant périphériquement comme montré en $31_1$. Ceci permet d'assurer un dégazage par l'intermédiaire de la couche duveteuse $1_1$.

La fig. 9 illustre une variante du procédé précédent et selon laquelle on réalise un nouveau matériau complexe stratifié en disposant dans le moule 30 deux plaques 31 opposées par les faces fibreuses 1b qui délimitent entre elles le volume libre 32 devant être occupé par une couche 33 de mousse M. Le matériau obtenu est un complexe stratifié comprenant deux parements, formés par les deux croûtes 1, reliées par une âme en mousse M.

Dans les exemples ci-dessus, il va de soi que les plaques 31 peuvent aussi être du type selon la fig. 4.

Dans les deux cas, les moules 30 utilisés possèdent, de préférence, des ajours ou des ouvertures 34 disposés dans le plan de la ou des couches $1_1$, de manière à favoriser par ces dernières le dégazement de la phase de développement de la mousse M.

Dans les matériaux complexes stratifiés obtenus selon le procédé des fig. 8 et 9, la mousse M est surdensifiée à l'intérieur des couches $1_1$ qu'elle a pénétrées. Chaque couche fibreuse $1_1$ constitue donc une transition progressive entre deux matériaux au comportement très différent que sont la croûte en résine 1 et la couche 33 en mousse expansée.

La couche $1_1$ de feutre non fondu a plusieurs fonctions importantes, à savoir :

— elle permet l'évacuation de l'air progressivement chassé du complexe fibreux au moment de la fusion,

— elle favorise l'expulsion de l'air contenu dans le volume 32 par la mousse expansée.

En effet, à ce jour, l'expulsion de l'air est obtenue au moyen d'évents. Leur section est toujours un compromis entre la nécessité de ne pas créer de contre-pressions opposées à l'expansion de la mousse et la nécessité d'éviter que la mousse en fin d'expansion ne s'échappe en trop grande quantité. La pratique courante consiste à réaliser des évents de faible diamètre et à augmenter d'au moins 30 % le poids de la mousse, de manière que celle-ci développe une pression suffisante pour chasser l'air freiné au passage des évents. Ainsi, l'expansion de la mousse est ralentie, ce qui nuit à son isotropie et, en fin d'expansion, la mousse exerce une pression importante et inutile qu'il faut contenir en renforçant la structure du moule.

En revanche, grâce à l'invention, il est possible de mouler la mousse M à très basse pression, sans aucun risque de débordement. En effet, la ou les deux couches $1_1$, ouvertes sur tout le pourtour, constituent pour l'air un passage qui est plusieurs dizaines de fois supérieur à celui offert par des évents convenablement dimensionnés. En conséquence, en se surdensifiant par laminage à l'intérieur de la ou des couches $1_1$, la mousse M crée d'elle-même le bouchon qui évite son échappement.

Par ailleurs, le moulage par réaction présente habituellement le risque de voir se former des poches d'air définitivement prisonnières de la mousse à l'intérieur de la cavité à remplir. Ce risque est d'autant plus important que la forme de la cavité est complexe.

La partie fibreuse de chaque croûte 1 permet d'éliminer ce risque. En effet, sa contexture est suffisamment dense pour éviter qu'elle ne soit totalement pénétrée avant que la mousse n'ait entièrement occupé le volume 32. La pénétration de la mousse à l'intérieur de la couche $1_1$ est donc progressive et régulière sur toute la surface. L'air a ainsi la possibilité de s'échapper jusqu'au moment de l'ultime remplissage du volume 32.

En outre, le plan de jonction entre la mousse M et les croûtes 1 est, habituellement, un point privilégié de rupture. Celle-ci résulte de l'éclatement de la mousse ou de son décollement. Le manque d'adhérence est, le plus souvent, imputable à la nature des matériaux qui ont peu ou pas d'affinité chimique. Le procédé de fabrication peut être incriminé lorsque la mousse est dans un état de polymérisation trop avancé lorsqu'elle prend contact avec la croûte. La nécessité de réaliser une transition progressive entre les croûtes 1 et la mousse M a conduit, jusqu'à présent, les constructeurs à coller des fibres ou un mat de verre sur la face intérieure de la ou des croûtes. Une telle opération est longue et coûteuse. Pour être efficace, la couche de colle doit être épaisse. De plus, la mousse polyuréthanne, très sensible aux vapeurs de solvants, ne peut être expansée avant que la colle ne dégage plus aucune vapeur. Même après plusieurs jours, la mousse, entrant en contact avec la colle, subit un phénomène de surexpansion nuisible à l'adhérence.

Le matériau conforme à l'invention permet d'éliminer cet inconvénient, par le fait que la couche fibreuse $1_1$ de la structure est solidarisée à la croûte par fusion, ce qui évite tous les risques et les inconvénients cités précédemment.

De plus, la mousse qui a pénétré la couche $1_1$ a une densité moyenne quatre à cinq fois supérieure à celle de l'âme. La surdensification est due à l'éclatement des cellules lorsqu'elles sont tranchées par une fibre. Seules les premières cellules perdent du gaz, ce qui explique pourquoi la surdensification est proportionnelle à l'épaisseur du feutre traversé. Lorsque l'on utilise un feutre aiguilleté, sa résistance à l'arrachement dans la mousse et à la surface de la croûte est suffisante pour qu'il puisse constituer, partiellement imprégné, une liaison qui améliore l'isolation phonique de la structure. L'expérience démontre que, tant que le feutre n'est pas entièrement imprégné, la pression de moulage reste faible. Par suite, cette réserve permet une tolérance plus large quant au poids de la mousse à injecter. Ceci est très appréciable lorsque la température des différents constituants de la structure est difficile à contrôler.

## Possibilités d'applications industrielles

L'invention peut être mise en œuvre dans de nombreux domaines. Le nouveau matériau peut être utilisé en tant que revêtement à caractère isolant ou décorateur pour murs, cloisons ou objets manufacturés ou esthétiques domestiques industriels ou en tant que matière première pour la réalisation de complexes stratifiés.

## Revendications

1. Procédé de fabrication d'un nouveau matériau à base de résine thermoplastique, dans lequel on :
— prépare un feutre à base de fibres en résine thermoplastique,
— couche au moins un feutre dans un moule,
— chauffe l'une des faces du moule au moins en exerçant une pression sur le feutre,
— monte et régule la température de la face chauffante du moule jusqu'à la température de fusion des fibres en résine thermoplastique,
— maintient cette température pour provoquer la fusion des fibres du feutre sur une partie de l'épaisseur de ce dernier,
— ouvre le moule pour dégager le nouveau matériau,
caractérisé en ce qu'il consiste à :
— coucher le feutre dans un moule ouvert à sa périphérie,
— chauffer l'une des faces du moule en exerçant une pression sur le feutre comprise entre 490 et 2 943 Pa (50 et 300 kgp/m²),
— refroidir le moule avant son ouverture et après la fusion des fibres tout en maintenant ladite pression.

2. Procédé selon la revendication 1, caractérisé en ce qu'il consiste à chauffer une face du moule tout en refroidissant l'autre.

3. Procédé selon la revendication 1 ou 2, caractérisé en ce qu'il consiste à chauffer, simultanément, les deux faces du moule.

4. Procédé selon la revendication 1, caractérisé en ce qu'il consiste à disposer dans le moule une structure de renforcement interposée entre deux feutres.

5. Procédé selon la revendication 4, caractérisé en ce qu'il consiste à interposer une structure de renforcement en plusieurs strates, l'une d'elles étant constituée par un entrelacement de fils monobrin en matière thermofusible.

6. Procédé selon la revendication 1, caractérisé en ce qu'il consiste, en outre, à placer dans un moule au moins une épaisseur de nouveau matériau, de telle manière que la couche fibreuse soit dirigée vers le volume libre du moule qui comporte des ouvertures situées dans le plan de ladite couche, puis à développer une mousse dans le volume utile.

7. Nouveau matériau stratifié à base d'un feutre d'une résine thermoplastique, obtenu par la mise en œuvre du procédé selon l'une des revendications 1 à 6, se présentant sous la forme d'une croûte (1) ayant au moins une face lisse (1a) et possédant au moins une couche de résine thermoplastique dense et compacte et une couche fibreuse $(1_1)$ formée de fibres en résine thermoplastique faisant partie intégrante de la couche compacte,
caractérisé en ce que la couche de résine thermoplastique dense et compacte est exempte d'inclusion gazeuse et les fibres de la couche fibreuse $(1_1)$ ont l'aspect foisonnant des fibres du feutre initial, notamment au niveau de leur pied de liaison avec la croûte (1).

8. Nouveau matériau stratifié selon la revendication 7, caractérisé en ce qu'il comprend, dans la couche dense, une structure de renforcement.

9. Nouveau matériau stratifié selon la revendication 7 ou 8, caractérisé en ce qu'il comprend deux couches denses, compactes et exemptes d'inclusion, reliées entre elles par une couche fibreuse.

10. Nouveau matériau stratifié selon l'une des revendications 8 ou 9, caractérisé en ce que la structure de renforcement est constituée sous la forme d'un réseau maillé défini par des alvéoles fermés conférant audit matériau une structure locale analogue à un matériau nids d'abeille.

11. Nouveau matériau complexe stratifié, caractérisé en ce qu'il comprend au moins une épaisseur du nouveau matériau selon l'une des revendications 7 à 9 et une couche de mousse accrochée à la couche fibreuse qui forme couche de transition entre la mousse et la couche compacte.

12. Nouveau matériau complexe stratifié selon la revendication 11, caractérisé en ce qu'il est constitué par deux épaisseurs de nouveau matériau se faisant face par les couches fibreuses qui sont reliées par une âme en mousse.

## Claims

1. Process for the production of a new laminated material based on thermoplastic resin, comprising the steps of :

— preparing a felt from thermoplastic resin fibers,

— laying at least one felt in a mold,

— heating at least one of the faces of the mold while applying a pressure on the felt,

— raising and controlling the temperature of the heating face of the mold to reach the melting temperature of the thermoplastic resin fibers,

— maintaining said temperature in order to cause the melting of the fibers in the felt over part of the thickness of said felt,

— opening the mold for releasing the new material, characterized in that it consists in :

— laying the felt in a mold open at its periphery,

— heating one of the faces of the mold while applying a pressure on the felt varying between 490 and 2 943 Pa (50 and 300 kgp/m$^2$),

— cooling the mold before opening it and after the melting of the fibers while keeping up said pressure.

2. Process according to claim 1, characterized in that it consists in heating one face of the mold while cooling the other.

3. Process according to claim 1 or 2, characterized in that it consists in heating, simultaneously, the two faces of the mold.

4. Process according to claim 1, characterized in that it consists in placing inside the mold a reinforcing structure interposed between two felts.

5. Process according to claim 4, characterized in that it consists in interposing a reinforcing structure in several layers, one of said layers being constituted by a criss-crossing of mono-strand yarns in thermo-meltable material.

6. Process according to claim 1, characterized in that it further consists in placing inside a mold at least one thickness of new material, in such a way that the fibrous layer faces towards the free volume of the mold which comprises apertures situated inside the plane of said layer, and then in developing a foam in the serviceable volume.

7. New laminated material based on a felt of thermoplastic resin, obtained by carrying out the process according to one of claims 1 to 6, being in the form of a skin (1) with at least one smooth face (1a) and having at least one dense and compact layer of thermoplastic resin and one fibrous layer (1$_1$) composed of thermoplastic resin fibers forming an integral part of the compact layer, characterized in that the dense and compact layer of thermoplastic resin is free of gas pockets and the fibers of the fibrous layer (1$_1$) have the swelling appearance of the fibers of the initial felt, particularly at the level of their base joining up with the skin (1).

8. New laminated material according to claim 7, characterized in that it comprises, within the dense layer, a reinforcing structure.

9. New laminated material according to claim 7 or 8, characterized in that it comprises two dense, compact and gas pocket-free layers bonded together by a fibrous layer.

10. New laminated material according to one of claims 8 or 9, characterized in that the reinforcing structure is constituted to form a meshed network defined by closed cells conferring to said material a local structure similar to a honeycombed material.

11. New laminated complex material, characterized in that it comprises at least one thickness of the new material according to one of claims 7 to 9, and one layer of foam bonded to the fibrous layer and forming a transitional layer between the foam and the compact layer.

12. New laminated complex material according to claim 11, characterized in that it is constituted by two thicknesses of new material facing each other by their fibrous layers which are joined up by a foam core.

## Patentansprüche

1. Verfahren zur Herstellung eines neuen Materials auf Basis von thermoplastischem Harz, bei dem man :

— einen Filz auf Basis von Fasern aus thermoplastischem Harz herstellt,

— wenigstens einen Filz in eine Form legt,

— wenigstens eine der Flächen der Form bei Ausübung eines Drucks auf den Filz erhitzt,

— die Temperatur der Heizfläche der Form bis zur Schmelztemperatur der Fasern aus thermoplastischem Harz steigert und reguliert,

— diese Temperatur zum Bewirken des Schmelzens der Fasern des Filzes in einem Teil der Dicke des letzteren beibehält,

— die Form zur Freigabe des neuen Materials öffnet, dadurch gekennzeichnet, daß es darin besteht :

— den Filz in eine an ihrem Umfang offene Form zu legen,

— die eine der Flächen der Form bei Ausübung eines Drucks auf den Filz im Bereich von 490 bis 2 943 Pa (50 bis 300 kgp/m$^2$) zu erhitzen,

— die Form vor ihrem Öffnen und nach dem Schmelzen der Fasern unter Aufrechterhaltung dieses Drucks abzu kühlen.

2. Verfahren nach dem Anspruch 1, dadurch gekennzeichnet, daß es darin besteht, eine Fläche der Form bei Kühlung der anderen zu erhitzen.

3. Verfahren nach dem Anspruch 1 oder 2, dadurch gekennzeichnet, daß es darin besteht, die zwei Flächen der Form gleich zeitig zu erhitzen.

4. Verfahren nach dem Anspruch 1, dadurch gekennzeichnet, daß es darin besteht, in der Form eine zwischen zwei Filze eingelegte Verstärkungsstruktur anzuordnen.

5. Verfahren nach dem Anspruch 4, dadurch gekennzeichnet, daß es darin besteht, eine Verstärkungsstruktur in mehreren Schichten einzulegen, von denen eine aus einem Geflecht von Einzelfadensträngen aus wärmeschmelzbarem Material besteht.

6. Verfahren nach dem Anspruch 1, dadurch gekennzeichnet, daß es darin besteht, außerdem in einer Form wenigstens eine Wanddieke neuen Materials derart anzuordnen, daß die Faserschicht, zum freien Volumen der Form gerichtet ist, worin in der Ebene der Schicht befindliche Öffnungen vorgesehen sind, und dann einen Schaum im brauch baren Volumen zu entwickeln.

7. Neues geschichtetes Material auf Basis eines Filzes aus thermoplastischem Harz, das mittels Durchführung des Verfahrens nach einem der Ansprüche 1 bis 6 erhalten wurde, sich in der Form einer Kruste (1) mit wenigstens einer glatten Fläche (1a) zeigt und wenigstens eine Schicht aus dichtem und kompaktem thermoplastischem Harz und eine Faserschicht ($1_1$) aufweist, die aus einem integrierenden Teil der kompakten Schicht darstellenden Fasern aus thermoplastischem Harz gebildet ist, dadurch gekennzeichnet, daß die dichte und kompakte Schicht aus thermoplastischem Harz frei von Gaseinschluß ist und die Fasern der Faserschicht ($1_1$) den aufquellenden Anblick der Fasern des ursprünglichen Filzes vor allem auf Höhe ihrer Verbindungsbasis mit der Kruste (1) haben.

8. Neues geschichtetes Material nach dem Anspruch 7, dadurch gekennzeichnet, daß es in der dichten Schicht eine Verstärkungsstruktur aufweist.

9. Neues geschichtetes Material nach dem Anspruch 7 oder 8, dadurch gekennzeichnet, daß es zwei dichte, kompakte und einschlußfreie Schichten aufweist, die untereinander durch eine Faserschicht verbunden sind.

10. Neues geschichtetes Material nach einem der Ansprüche 8 oder 9, dadurch gekennzeichnet, daß die Verstärkungsstruktur in der Form eines Maschennetzes ausgebildet ist, das durch geschlossene Zellen definiert wird, die dem Material eine einem Wabenmustermaterial analoge Struktur verleihen.

11. Neues zusammengesetzes geschichtetes Material, dadurch gekennzeichnet, daß es wenigstens eine Wanddicke aus neuem Material nach einem der Ansprüche 7 bis 9 und eine Schaumschicht aufweist, die mit der Faserschicht verklebt ist, die eine Übergangsschicht zwischen dem Schaum und der kompakten Schicht bildet.

12. Neues zusammengesetztes geschichtetes Material nach dem Anspruch 11, dadurch gekennzeichnet, daß es aus zwei Wanddicken neuen Materials gebildet ist, die einander mit den Faserschichten zugewandt sind, die durch einen Kern aus Schaum verbunden sind.

Fig-1

Fig.2

Fig-3

Fig.4

Fig.5

Fig.6

27

Fig.7

29

Fig-8

Fig-9